# EUROPEAN PATENT APPLICATION

(11) **EP 1 926 072 A1**
(43) Date of publication of application: **28.05.2008**
(21) Application number: 06797840.3
(22) Date of filing: 12.09.2006
(51) Int. Cl.: G08G 1/16, B60R 21/00, G08G 1/09

(54) **DRIVE ASSISTANCE DEVICE, DRIVE ASSISTANCE METHOD, DRIVE ASSISTANCE PROGRAM, AND RECORDING MEDIUM**

(30) Priority: 13.09.2005 JP 2005265627
(71) Applicant: Pioneer Corporation, Tokyo 153-8654 (JP)
(72) Inventor: SHIBASAKI, Hiroaki, c/o Pioneer Corporation, Tokyo 153-8654 (JP)
(74) Representative: Haley, Stephen
(86) International application number: PCT/JP2006/318043
(87) International publication number: WO 2007/032335

(57) **Abstract**

A driving support apparatus (100) communicates with a first communication apparatus that is provided adjacent to a road, a second communication apparatus that is provided adjacent to another road merging with the first road at a junction, a third communication apparatus that is set between the junction and the second communication apparatus, and a fourth communication apparatus that is set between the junction and the first communication apparatus. A receiving unit (101) receives information that is sent from the first communication apparatus and concerns a driving direction of a first moving object traveling on the road, and information that is sent from the second communication apparatus and concerns a driving direction of a second moving object traveling on the other road. A judging unit (102) judges a possibility of a collision between the first moving object and the second moving object based on the information concerning the driving direction that is sent by the receiving unit (101). A transmitting unit (103) that transmits a judgment result by the judging unit (102) to the third communication apparatus and the fourth communication apparatus.

## Description

### TECHNICAL FIELD

The present invention relates to a driving support apparatus, a driving support method, a driving support program, and a recording medium that support operation of a mobile vehicle. Application of this invention is not limited to the driving support apparatus, the driving support method, the driving support program, and the recording medium.

### BACKGROUND ART

Conventionally, to prevent accidents at and near junctions, techniques that provide drivers with information have been disclosed.

According to such techniques, an external transmitter mounted on a traffic light at a junction (intersection) transmits information indicative of a signal change to a reception area, and an in-vehicle device mounted on a car traveling within the reception area receives the information to inform the driver of a corresponding warning message by sound or text. As a result, the driver can know what actions to take to prevent an accident resulting from driver carelessness near the junction (see, for example, Patent Document 1 below).

Patent Document 1 Japanese Patent Laid-open Publication No. 2003-077093

### DISCLOSURE OF INVENTION

### PROBLEM TO BE SOLVED BY THE INVENTION

However, the above conventional technique has a problem in that the driver does not know how he or she should drive the car with respect to another car approaching the junction. In such a case, when one driver obeys a traffic light and the other driver ignores the traffic light, the drivers cannot cope with actual traffic conditions to prevent an accident at the junction.

Furthermore, sites having no traffic light, where accidents commonly occur, such as blind junctions and continuously curved roads, exist. However, although many accidents may occur at a site, a traffic light is not always provided at the site. Even when a traffic light is provided, traffic accidents cannot be prevented until the traffic light is actually used.

Furthermore, since a traffic light cannot be provided at an expressway junction, the prevention of traffic accidents depends on the driving technique of a driver. Driving technique significantly varies according to driving experience. When an inexperienced driver drives at an expressway junction, there is a high possibility that a traffic accident might occur.

### MEANS FOR SOLVING PROBLEM

To solve the above problems and achieve an object, the driving support apparatus according to claim 1 communicates with a first communication apparatus that is provided adjacent to a road, a second communication apparatus that is provided adjacent to another road merging with the road at a junction, a third communication apparatus that is provided between the junction and the second communication apparatus, and a fourth communication apparatus that is provided between the junction and the first communication apparatus. The driving support apparatus includes: a receiving unit that receives information that is sent from the first communication apparatus and concerns a driving direction of a first moving object traveling on the road, and information that is sent from the second communication apparatus and concerns a driving direction of the second moving object traveling on the other road; a judging unit that judges a possibility of a collision between the first moving object and the second moving object based on the information that is received by the receiving unit and concerns the driving direction; and a transmitting unit that transmits a judgment result by the judging unit to the third communication apparatus and the fourth communication apparatus.

Furthermore, the driving support apparatus according to claim 2 communicates with a first communication apparatus that is provided adjacent to one road, and a second communication apparatus that is provided adjacent to another road merging with the road at a junction. The driving support apparatus includes: a receiving unit that receives information that is sent from the first communication apparatus and concerns a driving direction of a first moving object traveling on the road, and information that is sent from the second communication apparatus and concerns a driving direction of the second moving object traveling on the other road; a judging unit that judges a possibility of a collision between the first moving object and the second moving object based on the information that is received by the receiving unit and concerns the driving direction; and a transmitting unit that transmits a judgment result by the judging unit to the first communication apparatus and the second communication apparatus.

Furthermore, the driving support method according to claim 6 uses a first communication apparatus that is provided adjacent to one road, a second communication apparatus that is provided adjacent to another road merging with the road at a junction, a third communication apparatus that is set between the junction and the second communication apparatus, and a fourth communication apparatus that is set between the junction and the first communication apparatus. The driving support method includes: a receiving step of receiving information that is sent from the first communication apparatus and concerns a driving direction of a first moving object traveling on the road, and information that is sent from the second communication apparatus and concerns a driving direction of the second moving object traveling on the other road; a judging step of judging a possibility of a collision between the first moving object and the second moving object based on the information that is received at the receiving step and concerns the driving direction; and a transmitting step of transmitting a judgment result at the judging step to the third communication apparatus and the fourth communication apparatus.

Furthermore, the driving support method according to claim 7 uses a first communication apparatus that is provided adjacent to one road, and a second communication apparatus that is provided adjacent to another road merging with the road at a junction. The driving support method includes: a receiving step of receiving information that is sent from the first communication apparatus and concerns a driving direction of a first moving object traveling on the road, and information that is sent from the second communication apparatus and concerns a driving direction of the second moving object traveling on the other road; a judging step of judging a possibility of a collision between the first moving object and the second moving object based on the information that is received at the receiving step and concerns the driving direction; and a transmitting step of transmitting a judgment result at the judging step to the third communication apparatus and the fourth communication apparatus.

Furthermore, the driving support program according to claim 8 causes a computer to execute the driving support method according to claims 6 or 7.

Furthermore, the computer-readable recording medium according to claim 9 stores therein the driving support program according to claim 8.

### BRIEF DESCRIPTION OF DRAWINGS

Fig. 1 is a block diagram of a functional configuration of a driving support apparatus according to an embodiment;
Fig. 2 is a flowchart of a driving support process performed by the driving support apparatus;
Fig. 3 is a schematic illustrating traffic conditions targeted by a driving support apparatus according to an example;
Fig. 4 is a block diagram of a hardware configuration of a server;
Fig. 5 is a flowchart of a driving support process performed by a first main-road-side device;
Fig. 6 is a flowchart of a process performed by a server; and
Fig. 7 is a flowchart of a driving support process performed by a second merging-road-side device.

### EXPLANATIONS OF LETTERS OR NUMERALS

- 100: DRIVING SUPPORT APPARATUS
- 101: RECEIVING UNIT
- 102: JUDGING UNIT
- 103: TRANSMITTING UNIT
- 104: CALCULATING UNIT

### BEST MODE(S) FOR CARRYING OUT THE INVENTION

Referring to the accompanying drawings, exemplary embodiments of the driving support apparatus, the driving support method, the driving support program, and the recording medium according to the present invention are explained in detail below.

### (Embodiment)

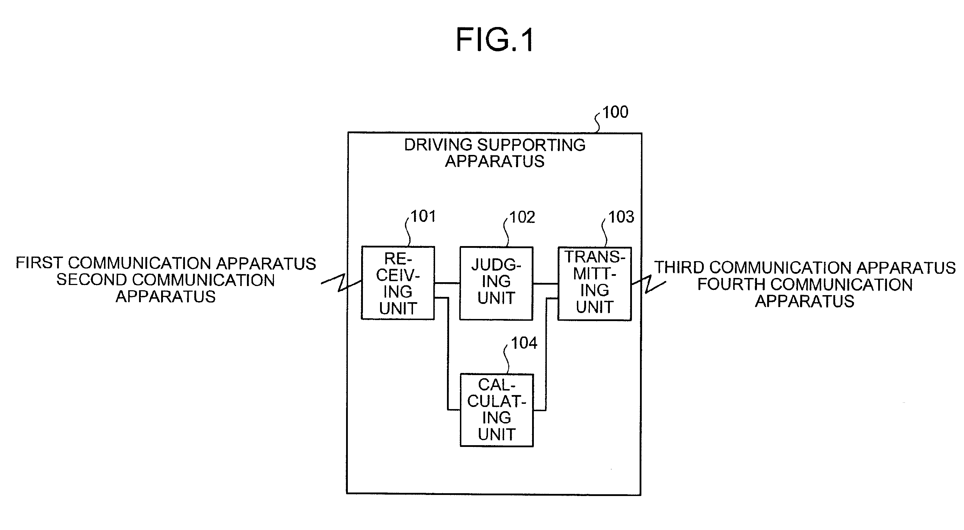

Firstly, a functional configuration of a driving support apparatus 100 according to the embodiment is explained. Fig. 1 is a block diagram of a functional configuration of a driving support apparatus according to the embodiment. As shown in Fig. 1, a driving support apparatus 100 includes a receiving unit 101, a judging unit 102, a transmitting unit 103, and a calculating unit 104.

The driving support apparatus 100 can communicate with a first communication apparatus provided adjacent to a first road, a second communication apparatus provided adjacent to a second road merging with the first road at a junction, a third communication apparatus provided between the junction and the second communication apparatus, and a fourth communication apparatus provided between the junction and the second communication apparatus.

The third communication apparatus is provided adjacent to any section of the second road between the second communication apparatus and the junction. The fourth communication apparatus is provided adjacent to any section of the first road between the first communication apparatus and the junction.

The receiving unit 101 receives, from the first communication apparatus, information concerning a moving direction of a first moving object traveling on the first road. The receiving unit 101 also receives, from the second communication apparatus, information concerning a moving direction of a second moving object traveling on the second road merging with the first road at a junction. At that time, the receiving unit 101 may receive, besides the information concerning the moving direction, information identifying each moving object (for example, a unique identifier (ID) to identify a moving object among other moving objects).

The information concerning the moving direction of the moving object includes, for example, moving direction information or destination information that is sent from a communication device mounted on the first or the second moving object, and information that the first or the second communication apparatus receives from the corresponding moving object and transmits to the driving support apparatus 100.

The receiving unit 101 may receive information concerning the velocity of the first and the second moving objects. The information concerning the velocity includes, for example, current velocity information sent from the communicating device mounted on the first or the second moving object. For example, the first or the second communication apparatus may transmit a velocity measuring wave to a moving object passing by the first or the second communication apparatus to obtain information concerning a moving direction and velocity of the moving object from the reflected wave.

The judging unit 102 judges the possibility of a collision between the first and the second moving objects based on the information concerning the moving direction that is received by the receiving unit 101. The judging unit 102 judges whether there is a point at which the first and the second moving objects will cross if each continues to travel on respective roads without changing respective moving directions, and when there is a point of crossing, determines that there is a possibility of a collision.

Furthermore, the judging unit 102 judges, when the receiving unit 101 receives the information concerning the velocity, the possibility of a collision based on the information concerning the velocity in addition to the information concerning the moving direction. Furthermore, the judging unit 102 judges, when the calculating unit 104 calculates an arrival time at which the first and the second moving objects will arrive at the junction, the possibility of a collision based on the information concerning the calculated arrival time in addition to the information concerning the moving direction. In this case, when a time difference between the arrival times at which the first and the second moving objects arrive at the junction is equal to or less than a predetermined value, the judging unit 102 determines that there is a possibility of a collision.

The transmitting unit 103 transmits a judgment result of the judging unit 102 to the third and the fourth communication apparatuses. For example, the transmitting unit 103 transmits, to the third and the fourth communication apparatuses, information indicating that there is a possibility of a collision between the first and the second moving objects or there is no possibility of a collision therebetween. When the judging unit 102 determines that there is no possibility of a collision between the first and the second moving objects, the transmitting unit 103 may omit transmitting the information.

The calculating unit 104 calculates an arrival time at which each of the first and the second moving objects arrives at the junction. The arrival time may be a time identifying a point on a time axis such as a specific time, or a time interval, such as a period of time.

More specifically, for example, the calculating unit 104 calculates, by approximating the position of the first communication apparatus by the position of the first moving object passing by the first communication apparatus, an arrival time at which the first moving object arrives at the junction based on information concerning the velocity of the first moving object and a distance between the first communication apparatus and the junction. In other words, the calculating unit 104 calculates the arrival time by dividing the distance between the position of the first communication apparatus and the junction by the velocity of the moving object. In a similar manner, the calculating unit 104 calculates an arrival time at which the second moving object arrives at the junction by approximating the position of the second communication apparatus by the position of the second moving object.

Furthermore, the calculating unit 104 calculates the arrival time at which the first moving object arrives at the junction by obtaining a current position of the first moving object from the first moving object, calculating a distance between the current position and the junction, and dividing the calculated distance by the current velocity of the first moving object.

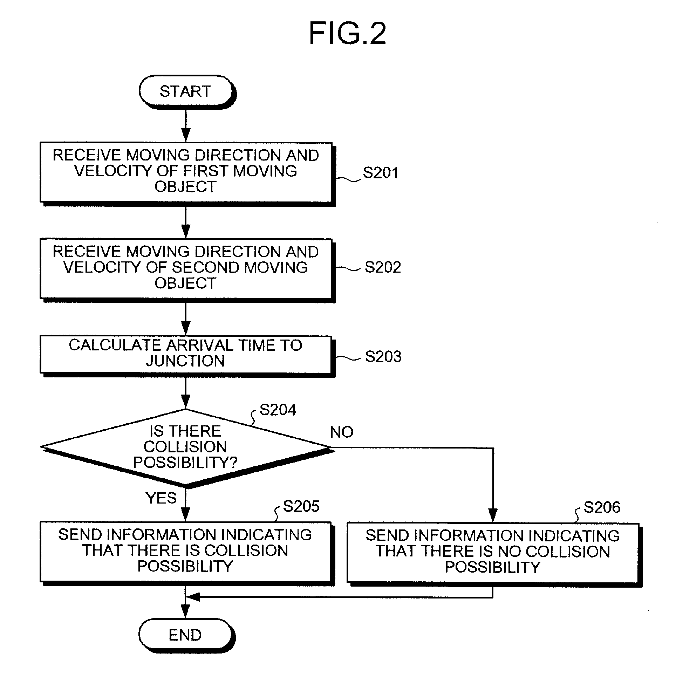

Next, a driving support process performed by the driving support apparatus 100 is explained below. Fig. 2 is a flowchart of a driving support process performed by the driving support apparatus. As shown in Fig. 2, the receiving unit 101 of the driving support apparatus 100 receives information concerning the moving direction and the velocity of the first moving object (step S201). The receiving unit 101 receives information concerning the moving direction and the velocity of the second moving object (step S202).

The calculating unit 104 calculates an arrival time at which each of the first and the second moving objects arrive at the point of crossing (step S203). The judging unit 102 judges whether there is a possibility of a collision (step S204). When there is a possibility of a collision (step S204: YES), the transmitting unit 103 transmits information indicating that there is a possibility of a collision between the first and the second moving objects to the third and the fourth communication apparatuses (step S205), and the process ends.

On the other hand, when there is no possibility of a collision (step S204: NO), the transmitting unit 103 transmits information indicating that there is no possibility of a collision between the first and second moving objects (step S206), and the process ends. At this time, the transmitting unit 103 may be configured to not transmit the information and the process ends.

As explained above, according to the driving support apparatus 100 of the embodiment, the possibility of a collision between the first moving object traveling on the first road and the second moving object traveling on the second road merging with the first road at the junction can be judged, and a judgment result can be sent to the third and the fourth communication apparatuses.

Furthermore, the positions of the first and the second communication apparatuses are respectively approximated by the positions of the first and the second moving objects, enabling the calculation of the arrival time at which each of the first and the second moving objects arrives at the junction without obtaining the positions of the first and the second moving objects, respectively.

Although the driving support using the first to the fourth communication apparatuses is explained in the above embodiment, driving support using only the first and the second communication apparatuses is possible if the communication areas of the first and the second communication apparatuses respectively provided along the first road and the second roads are sufficiently wide. In other words, if communication areas of the first and the second communication apparatuses respectively cover communication areas of the fourth and the third communication areas, the third and the fourth communication apparatuses are not necessary.

Covering the third and the fourth communication areas means that the communication areas respectively cover all sections of the first and the second road from the first or the second communication apparatus to the junction. In this case, the driving support apparatus 100 transmits the information concerning the possibility of a collision to the first and the second communication apparatuses at steps S205 and S206 in Fig. 2.

### (Example)

Next, an example of the driving support apparatus 100 according to the above embodiment is explained below. Hereinafter, a case is explained in which the driving support apparatus 100 is applied to a driving support apparatus 300 that includes roadside devices 331, 332, 341, and 342, communication devices 311 and 321 respectively mounted on vehicles 310 and 320, and a server 350.

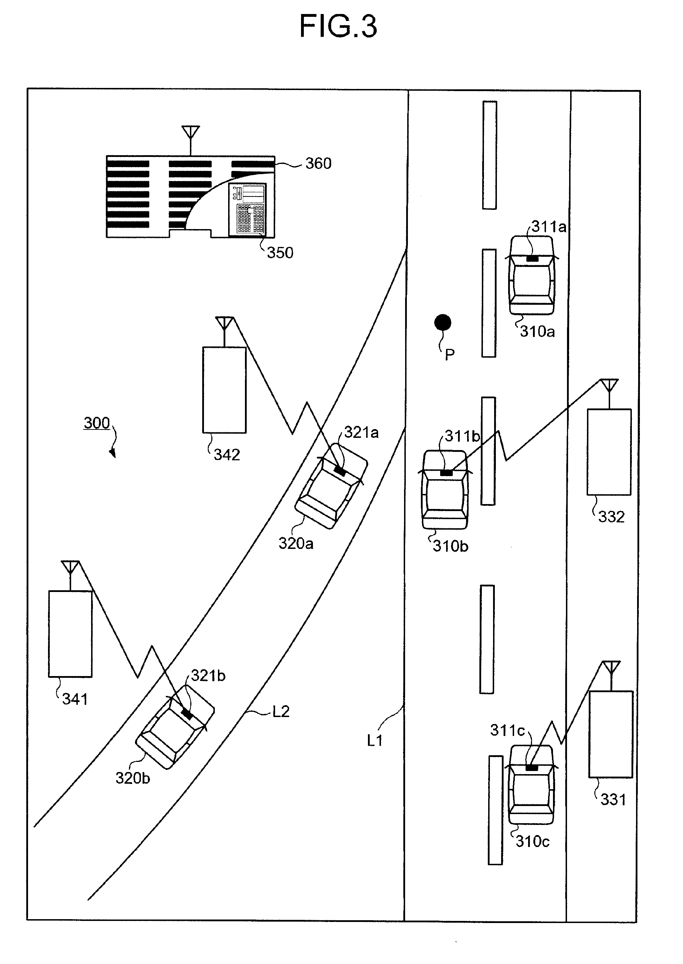

Firstly, applicable traffic conditions of the driving support apparatus 300 according to the example are explained. Fig. 3 is a schematic illustrating applicable traffic conditions of the driving support apparatus according to the example. As shown in Fig. 3, a junction P at which a merging road L2 merges with a main road L1 of an expressway is shown as an example of a junction. The vehicles 310 (310a to 310c) and 320 (320a and 320b) are traveling in the vicinity of the junction P. The vehicle 310 is a vehicle traveling on the main road L1, and the vehicle 320 is a vehicle traveling on the merging road L2.

The vehicles 310 and 320 include the communication devices 311 (311a to 311c) and 321 (321a and 321b), respectively. The communication devices 311 and 321 wirelessly communicate with roadside devices 331, 332, 341, and 342 that are provided at the roadsides of the main road L1 and the merging road L2 on which the vehicles 310 and 320 travel, to transmit traveling information of the vehicles 310 and 320 and receive driving support information.

An ID, such as an IP address, is uniquely assigned to each of the vehicles 310 and 320. The ID is used as a communication address in the driving support apparatus 300. The roadside devices 331, 332, 341, and 342 can transmit information to particular vehicles 310 and 320 using the IDs of the vehicles 310 and 320. The respective IDs of the vehicles 310 and 320 are stored in the communication devices 311 and 321, respectively.

The roadside devices 331, 332, 341, and 342 are roadside devices for narrow range communication such as DSRC (dedicated short range communication), and the communication areas thereof are narrow enough to approximate the positions of the vehicles 310 and 320 by the positions of the roadside devices 331, 332, 341, and 342 upon communication with the communication devices 311 and 321.

The roadside devices 331, 332, 341, and 342 can communicate with the server 350 through a network. Hereinafter, communication between the roadside devices 331, 332, 341, and 342 and the vehicles 310 and 320 is called narrow range communication, and communication between the roadside devices 331, 332, 341, and 342 and the server 350 is called wide range communication. Each respective communication address is stored in each of the roadside devices 331, 332, 341, and 342, and the server 350 in advance. On the other hand, the roadside devices 331, 332, 341, and 342 do not store therein communication addresses of the vehicles 310 and 320, but rather respectively obtain the communication address of the vehicle by transmitting an ID request to the vehicle when the vehicle passes by.

Two roadside devices 331 and 332 (hereinafter, main-road-side device) are provided along the main road L1, and communicate with the communication device 311 mounted on the vehicle 310 traveling on the main road L1 by the narrow range communication. Two roadside devices 341 and 342 are provided along the merging road L2, and communicate with the communication device 321 mounted on the vehicle 320 traveling on the merging road L2, by the narrow range communication.

The roadside devices 331 and 332 are a first main-road-side device 331 and a second main-road-side device 332 that are arranged in ascending order according to the distance from the junction P. In other words, the vehicle 310 traveling on the main road L1 towards the junction P first communicates with the first main-road-side device 331 by the narrow range communication, and secondly communicates with the second main-road-side device 332 by the narrow range communication.

The roadside devices 341 and 342 are a first merging-road-side device 341 and a second merging-road-side device 342 that are arranged in ascending order according to the distance from the junction P. In other words, the vehicle 320 traveling on the merging road L2 towards the junction P firstly communicates with the first merging-road-side device 341 by the narrow range communication, and secondly communicates with the second merging-road-side device 342 by the narrow range communication.

The server 350 is provided at a server center 360 and corresponds to the driving support apparatus 100 according to the embodiment. The server 350 judges the possibility of collision using information received from the first main-road-side device 331 and the first merging-road-side device 341, and transmits a judgment result to the second main-road-side device 332 and the second merging-road-side device 342. The server 350 may be provided not only at the server center 360, but also at any one of the roadside devices 331, 332, 341, and 342.

A distance between the first main-road-side device 331 and the second main-road-side device 332 is set to be at least longer than a distance obtained by multiplying the maximum velocity for the main road L1 and the total time required for the server 350 to perform driving support processing and for the second main-road-side device 332 to receive the judgment result. A distance between the first merging-road-side device 341 and the second merging-road-side device 342 is set to be at least longer than a distance obtained by multiplying the maximum velocity for the merging road L2 and the total time required for the server 350 to perform driving support processing and for the second merging-road-side device 342 to receive the judgment result.

Driving support performed by the driving support apparatus 300 is explained below. The first main-road-side device 331 receives, from the vehicle 310 traveling on the main road L1, information concerning a vehicle ID, a moving direction, and a velocity, and transmits the received information to the server 350. The first merging-road-side device 341 receives, from the vehicle 320 traveling on the merging road L2, information concerning a vehicle ID, a moving direction, and a velocity, and transmits the received information to the server 350.

The server 350 judges the possibility of a collision between the vehicles 310 and 320 based on the received information, and transmits, to the second main-road-side device 332 and the second merging-road-side device 342, a judgment result including the IDs of the corresponding vehicles 310 and 320. The second main-road-side device 332 and the second merging-road-side device 342 are set apart, respectively, from the first main-road-side device 331 and the first merging-road-side device 341 by distances equal to or greater than a distance that can be traveled by the vehicles 310 and 320 during the total time required for the above processing.

The second main-road-side device 332 and the second merging-road-side device 342 obtain the respective IDs of vehicles passing thereby, respectively, and transmit warning information when the obtained IDs are identical to the IDs of the vehicles 310 and 320 that are designated as transmission destinations of the warning information. The communication devices 311 and 321 mounted on the vehicle 310 and 320 to which the warning information is sent inform the drivers of the vehicles 310 and 320 of the possibility of a collision by displaying contents of the warning information or outputting sound to prompt the drivers to take action to prevent a collision, such as decelerating and lane changing. Thus, the driving support apparatus 300 supports the driving of the vehicles 310 and 320.

Although a junction P at which the merging road L2 merges with the main road L1 of the expressway is taken as an example of a junction in the example below, an intersection with or without a traffic light may be taken as an example of the junction. In the case of an intersection without a traffic light, the possibility of an accident is high since it is impossible to anticipate the movement of another vehicle coming from an intersecting lane. Furthermore, even in the case of an intersection with a traffic light, it is necessary to judge the possibility of a collision when the traffic light is flashing at night or another car is traveling without regard for the traffic light.

Although a junction at which two roads merge is taken as an example in the example below, a junction of three, four, or five roads may be taken as an example since there is need to judge the possibility of a collision for these junctions. In this case, for example, a vehicle that is about to arrive at the junction (corresponding to the vehicle 320 in the example below) receives warning information from each roadside device provided adjacent to each road merging at the junction.

### (Hardware configuration of server 350)

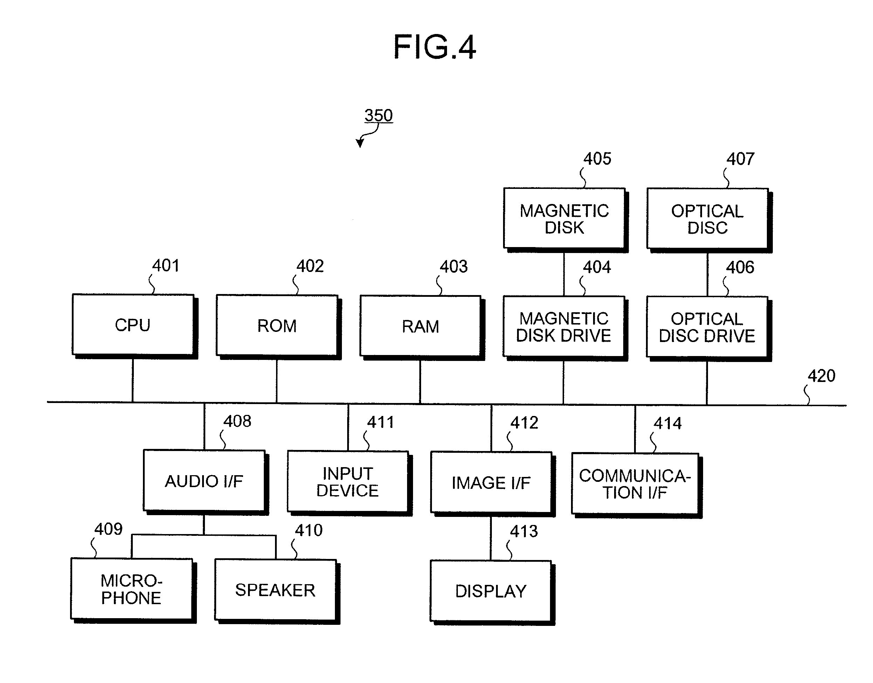

A hardware configuration of the server 350 is explained below. Fig. 4 is a block diagram of a hardware configuration of the server. As shown in Fig. 4, the server 350 includes a central processing unit (CPU) 401, a read only memory (ROM), a random access memory (RAM), a magnetic disk drive 404, a magnetic disk 405, an optical disc drive 406, an optical disc 407, an audio interface (I/F) 408, a microphone 409, a speaker 410, an input device 411, an image I/F 412, a display 413, and a communication I/F 414. The components 401 to 414 are connected via a bus 420.

The CPU 401 controls the server 350 overall. The ROM 402 stores a program such as a boot program, a communication program, a database program, and a data analysis program. The RAM 403 is used as a work area of the CPU 401.

The magnetic disk drive 404 controls writing/reading of data to/from the magnetic disk 405 under the control of the CPU 401. The magnetic disk 405 stores data that is written therein under the control of the magnetic disk drive 404. The magnetic disk 405 includes, for example, a hard disk (HD) and a flexible disk (FD).

The optical disc drive 406 controls writing/reading of data to/from the optical disc 407 under the control of the CPU 401. The optical disc 407 is a removable recording medium from which data is read under the control of the optical disc drive 406. A writable recording medium can be used as the optical disc 407. In addition to the optical disc 407, a magnet optical (MO) disc or a memory card can be used as the removable recording medium.

The audio I/F 408 is connected to the microphone 409 for inputting audio, and the speaker 410. The audio received by the microphone 409 is analog-to-digital (A/D) converted in the audio I/F 408. The speaker 410 outputs audio. The input device 411 includes a remote controller including plural keys to input characters, numbers, various instructions, etc., a keyboard, a mouse, and touch panel.

The image I/F 412 is connected to the display 413. The image I/F 412 includes, for example, a graphic controller that controls the display 413 overall, a buffer memory such as a video RAM (VRAM) that temporarily stores immediately-displayable image data, a control integrated circuit (IC) that controls the display 413 based on image data output from the graphic controller.

The display 413 displays an icon, a cursor, a menu, a window, various data such as characters and images. For example, a cathode ray tube (CRT), a thin-film-transistor (TFT) liquid crystal display, a plasma display etc. are used as the display 413.

The communication I/F 414 is connected to a network such as the Internet via radio transmission, and works as an interface between the network and the CPU 401. The network includes a local area network (LAN), a wide area network (WAN), a public line network, a cellular phone network, etc. More specifically, the communication I/F 414 includes, for example, a frequency modulation (FM) tuner, a vehicle information and communication system (VICS)/beacon receiver, a wireless communication device, and other communication device, and obtains, from the VICS center, traffic information such as a traffic congestion and traffic regulations. The VICS is a registered trademark.

Each of the roadside devices 331, 332, 341, and 342 includes at least the CPU 401, the ROM 402, and the communication I/F 414 among the hardware configuration of the server 350 explained above. Each of the communication devices 311 and 321 mounted on the vehicles 310 and 320 includes at least the CPU 401, the ROM 402, the RAM 403, the audio I/F 408, the speaker 410, the image I/F 412, the display 413, and the communication I/F 414 among the hardware configuration of the server 350 explained above.

Among the functional configuration of the driving support apparatus 100 according to the embodiment, the functions of the receiving unit 101 and the transmitting unit 103 are implemented by the communication I/F 414, and functions of the judging unit 102 and the calculating unit 104 are implemented by the CPU 401 executing a program stored in the ROM 402, etc.

### (Driving support processing performed by driving support apparatus 300)

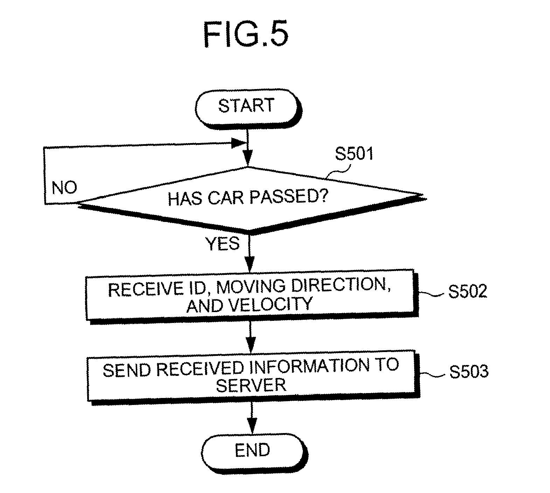

Driving support processing performed by the driving support apparatus 300 according to the example is explained below. Firstly, the processing performed by the first main-road-side device and the first merging-road-side device are explained. Fig. 5 is a flowchart of driving support processing performed by the first main-road-side device.

Although only processing performed by the first main-road-side device 331 is explained in the flowchart for convenience, the processing performed by the first merging-road-side device is identical to the processing performed by the first main-road-side device except for the road on which a targeted vehicle is traveling. Therefore, explanation of the process performed by the first merging-road-side device 341 is obtained by replacing the "vehicle 310" in explanation below with the "vehicle 320."

As shown in the flowchart of Fig. 5, the first main-road-side device 331 waits until the vehicle 310 passes thereby (step S501: NO). When the vehicle 310 passes (step S501: YES), the first main-road-side device 331 receives, from the communication device 311 mounted on the vehicle 311, an ID of the vehicle 310, a moving direction, and a velocity (step S502).

More specifically, the first main-road-side device 331 continuously transmits a request signal for velocity information including the moving direction, and receives information sent from the vehicle 310 entering a communication area. When the vehicle 310 includes a global-positioning-system (GPS) signal receiving device, i.e., a function of obtaining a current position thereof, the first main-road-side device 331 may request the vehicle 310 to transmit position information.

The first main-road-side device 331 transmits the information received at step S502 to the server 350 (step S503), and the process ends. Repeating the above process, the first main-road-side device 331 provides, to the server 350, information concerning the vehicle 310 traveling on the main road L1.

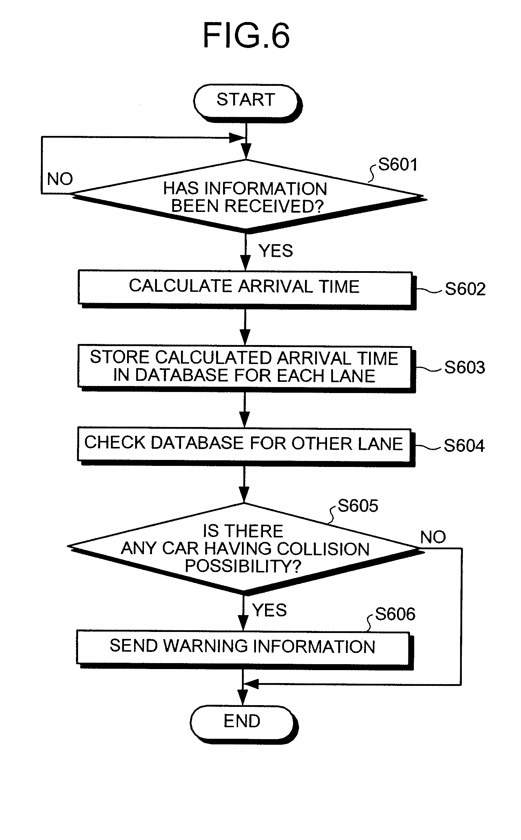

Processing performed by the server 350 is explained below. Fig. 6 is a flowchart of processing performed by the server. As shown in the flowchart of Fig. 6, the server 350 waits until receiving, from the first main-road-side device 331 or the first merging-road-side device 341, an ID, a moving direction, a velocity of the vehicle 310 or 320 (step S601: NO). Only the first main-road-side device 331 and the vehicle 320 are explained in the flowchart for convenience and are interchangeable with the first merging-road-side device 341 and the vehicle 320, respectively.

When receiving information from the first main-road-side device 331 (step S601: YES), the server 350 calculates an arrival time at which the vehicle 310 arrives at the junction P based on the received information concerning the moving direction and the velocity (step S602). More specifically, for example, the first main-road-side device 331 calculates the arrival time assuming that the vehicle 310 runs directly to the junction P maintaining the current velocity.

When calculating the arrival time, a distance between the junction P and the vehicle 310 is approximated by a distance between the first main-road-side device 331 and the junction P that is stored in the server 350. Since the time the vehicle 310 arrives at the junction P is dependent upon the velocity, which varies, an arrival time range having a given time interval may be calculated instead of the arrival time.

When the first main-road-side device 331 can receive a current position of the vehicle 310, the received current position may be used for calculating the arrival time. For example, when the communication device 311 mounted on the vehicle 310 has a function of identifying a current position of the vehicle 310 such as a GPS signal receiving function, the arrival time can be calculated more precisely by using the received information.

The server 350 having databases respectively provided for the roads L1 and L2 stores the calculated arrival time and the ID of the vehicle 310 in the database for the main road L1 (step S603). At this time, the server 350 stores, in the database for the main road L1, the information received from the first main-road-side device 331 as the information concerning the vehicle 310 traveling on the main road L1. And the server 350 stores, in the database for the merging road L2, the information received from the first merging-road-side device 341 as the information concerning the vehicle 320 traveling on the merging road L2. The server 350 holds the stored data at least until the arrival time elapses, and deletes the stored data thereafter. Furthermore, the server 350 may store velocity information and position information in addition to the arrival time and the ID.

The server 350 compares the arrival time calculated at step S602 and the database for the other road (the merging road L2 in this example), and judges whether there is a vehicle 320 with which there is a possibility of collision (step S605). More specifically, for example, the server 350 judges whether there is a vehicle 320 whose arrival time is within a predetermined time range of the arrival time of the vehicle 310 (for example, 15 minutes before and after the arrival time), and determines that there is a possibility of a collision with the vehicle 320 when the vehicle 320 is present.

When there is a possibility of a collision (step S605: YES), the server 350 transmits, to the second main-road-side device 332 and the second merging-road-side device 342, warning information including the IDs of the vehicles 310 and 320 that have the possibility of colliding (step S606), and the processing ends. On the other hand, when there is no possibility of a collision (step S605: NO), the server 350 does not transmit the warning information, and the processing ends.

At step S606, the IDs of the vehicles 310 and 320 are stored in the databases for the main road L1 and the merging road L2, respectively. The warning information is information for warning drivers of the vehicles 310 and 320 about the presence of the vehicles 320 and 310 with which there is a possibility of a collision, respectively. More specifically, the warning information includes information concerning the arrival time, the velocity, and the position information of each vehicle, and a specific instruction to prevent the collision. The warning information may be sent to either one of the two roadside devices.

As explained above, the roadside devices 331, 332, 341, and 342 and the vehicles 310 and 320 communicate with one another by the narrow range communication. As a result, when the server 350 finishes the above processing (from step S601 to step S606), the vehicle 310 deviates from the communication area of the first main-road-side device 331. Therefore, the server 350 transmits the warning information to the second main-road-side device 332 that is closer to the junction P than the first main-road-side device 331, located before the junction P, and further apart from the first main-road-side device 331 than the distance the vehicle 310 travels while the server 350 starts the driving support processing and transmits the processing result. In other words, the warning information is sent to the second main-road-side device 332 sooner than the vehicle 310 passes thereby.

A driving support process performed by the second main-road-side device 332 that receives the warning information is explained below. Although only the process performed by the second main-road-side device 332 is explained below for convenience, a process performed by the second merging-road-side device 342 is identical to the process performed by the second main-road-side device 332 except for the road on which the targeted vehicle is running. In other words, explanation of the process performed by the second merging-road-side device 342 can be obtained by replacing the "vehicle 310" in the explanation below with the "vehicle 320".

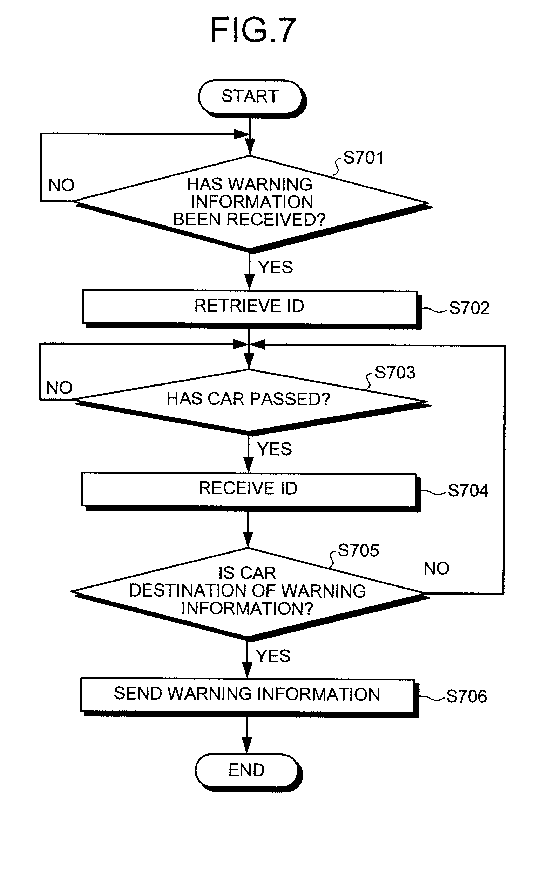

Fig. 7 is a flowchart of a driving support process performed by the second merging-road-side device. As shown in the flowchart of Fig. 7, the second merging-road-side device 332 waits until receiving the warning information sent by the server 350 (step S701: NO). When receiving the warning information (step S701: YES), the second merging-road-side device 332 retrieves, from the received warning information, the ID of the vehicle 310 that is the destination of the warning information (step S702).

The second merging-road-side device 332 waits until the vehicle 310 passes thereby (step S703: NO). When the vehicle 310 passes (step S703: YES), the second merging-road-side device 332 receives an ID from the passed vehicle 310 (step S704). The second merging-road-side device 332 compares the received ID and the ID retrieved at step S702, and judges whether the passed vehicle 310 is the destination of the warning information (step S705).

When the passed vehicle 310 is the destination of the warning information (step S705), i.e., the ID received at step S704 and the ID retrieved at step S702 are identical, the second merging-road-side device 332 transmits the warning information received at step S701 (step S706), and the process ends. On the other hand, when the passed vehicle 310 is not the destination of the warning destination (step S705), the process returns to step 703, and repeats the following process.

The communication device 311 mounted on the vehicle 310 to which the warning information is sent at step S706, informs a driver of the vehicle 310 of the presence of the vehicle 320 with which there is a possibility of collision, by displaying the transmitted warning information or outputting sound. The driver of the vehicle 310 can take action to prevent the collision with the vehicle 320 (for example, decelerating or changing lanes) based on the information informed by the communication device 311.

Although the two roadside devices are provided for each of the main road L1 and the merging road L2 in the above example, it is sufficient to provide only one roadside device for each of the main road L1 and the merging road L2 if the communication area of the roadside device is sufficiently wide. For example, if each communication area of the first main-road-side device 331 and the first merging-road-side device 341 includes the junction P, and each of the devices can communicate with the vehicles 310 and 320 that travel at different velocities and arrive at the junction at the same time, there is no need to provide the second main-road-side device 332 and the second merging-road-side device 342.

In this case, the first main-road-side device 331 and the first merging-road-side device 341 are provided with consideration of the distances that the vehicles 310 and 320 travel from the time when the vehicles 310 and 320 enter the communication areas to the time when the series of processing ends. In other words, the first main-road-side device 331 and the first merging-road-side device 341 are provided such that, when the series of processing ends, the vehicles 310 and 320 can take action to prevent the collision before the junction P.

Among the series of processing explained above, the first main-road-side device 331 and the first merging-road-side device 341 receive an ID, a moving direction, and a velocity from the vehicles 310 and 320 that enter the communication areas of the first main-road-side device 331 and the first merging-road-side device 341, respectively (see step S502 shown in Fig. 5). The server 350 transmits the warning information to the first main-road-side device 331 and the first merging-road-side device 341 (see step S606 shown in Fig. 6).

The first main-road-side device 331 and the first merging-road-side device 341 that receive the warning information transmit, based on the ID, the warning information to the vehicles 310 and 320 that are within the communication areas and have a possibility of colliding (see Fig. 7). Thus, the number of roadside devices provided at the main road L1 and the merging road L2 can be changed according to the communication area of each roadside device.

As explained above, the driving support apparatus 300 provides, to the drivers of the vehicles 310 and 320, information concerning the presence of the vehicles 310 and 320 that are traveling towards a junction, the arrival time to the junction, and the velocity, i.e., information to prevent a collision at the junction P. As a result, traffic around the junction P becomes smooth. Traffic safety around the junction P can be enhanced by instructing, using the velocity information of the vehicles 310 and 320, the driver to perform a specific action such as deceleration.

The communication devices mounted on the vehicles 310 and 320 may have at least the function of communicating with the roadside devices 331, 332, 341, and 342 and the function of outputting the received information. The roadside devices 331, 332, 341, and 342 may have the function of communicating with the communication devices 311 and 321 and the server 350. Therefore, the driving support can be performed with simple equipment.

The driving support method explained in the present embodiment can be implemented by a computer such as a personal computer and a workstation executing a program that is prepared in advance. This program is recorded on a computer-readable recording medium such as a hard disk, a flexible disk, a CD-ROM, an MO, and a DVD, and is executed by being read out from the recording medium by a computer. This program can be a transmission medium that can be distributed through a network such as the Internet.

## Claims

1. A driving support apparatus that communicates with a first communication apparatus that is provided adjacent to a road, a second communication apparatus that is provided adjacent to another road merging with the road at a junction, a third communication apparatus that is set between the junction and the second communication apparatus, and a fourth communication apparatus that is set between the junction and the first communication apparatus, the driving support apparatus comprising:
a receiving unit that receives information that is sent from the first communication apparatus and concerns a driving direction of a first moving object traveling on the road, and information that is sent from the second communication apparatus and concerns a driving direction of the second moving object traveling on the other road;
a judging unit that judges a possibility of a collision between the first moving object and the second moving object based on the information that is received by the receiving unit and concerns the driving direction; and
a transmitting unit that transmits a judgment result by the judging unit to the third communication apparatus and the fourth communication apparatus.

2. A driving support apparatus that communicates with a first communication apparatus that is provided adjacent to one road, and a second communication apparatus that is provided adjacent to another road merging with the road at a junction, the driving support apparatus comprising:
a receiving unit that receives information that is sent from the first communication apparatus and concerns a driving direction of a first moving object traveling on the road, and information that is sent from the second communication apparatus and concerns a driving direction of the second moving object traveling on the other road;
a judging unit that judges a possibility of a collision between the first moving object and the second moving object based on the information that is received by the receiving unit and concerns the driving direction; and
a transmitting unit that transmits a judgment result by the judging unit to the first communication apparatus and the second communication apparatus.

3. The driving support apparatus according to claim 1 or 2, wherein
the receiving unit receives information concerning velocities of the first moving object and the second moving object, and
the judging unit judges the possibility based on the information concerning the velocities that is received by the receiving unit.

4. The driving support apparatus according to claim 3, further comprising
a calculating unit that calculates an arrival time at which the first moving object and the second moving object arrive at the junction based on the information concerning the velocities, wherein
the judging unit judges the possibility based on a calculation result by the calculating unit.

5. The driving support apparatus according to claim 4, wherein the calculating unit calculates the arrival time based on a distance between the first communication apparatus and the junction and a distance between the second communication apparatus and the junction.

6. A driving support method that uses a first communication apparatus that is provided adjacent to one road, a second communication apparatus that is provided adjacent to another road merging with the road at a junction, a third communication apparatus that is set between the junction and the second communication apparatus, and a fourth communication apparatus that is set between the junction and the first communication apparatus, the driving support method comprising:
a receiving step of receiving information that is sent from the first communication apparatus and concerns a driving direction of a first moving object traveling on the road, and information that is sent from the second communication apparatus and concerns a driving direction of the second moving object traveling on the other road;
a judging step of judging a possibility of a collision between the first moving object and the second moving object based on the information that is received at the receiving step and concerns the driving direction; and
a transmitting step of transmitting a judgment result at the judging step to the third communication apparatus and the fourth communication apparatus.

7. A driving support method that uses a first communication apparatus that is provided adjacent to one road, and a second communication apparatus that is provided adjacent to another road merging with the road at a junction, the driving support method comprising:
a receiving step of receiving information that is sent from the first communication apparatus and concerns a driving direction of a first moving object traveling on the road, and information that is sent from the second communication apparatus and concerns a driving direction of the second moving object traveling on the other road;
a judging step of judging a possibility of a collision between the first moving object and the second moving object based on the information that is received at the receiving step and concerns the driving direction; and
a transmitting step of transmitting a judgment result at the judging step to the third communication apparatus and the fourth communication apparatus.

8. A driving support program that causes a computer to execute the driving support method according to claims 6 or 7.

9. A computer-readable recording medium that stores therein the driving support program according to claim 8.
